(19) Europäisches Patentamt
European Patent Office
Office européen des brevets

(11) **EP 4 202 432 A1**

(12) # EUROPEAN PATENT APPLICATION

(43) Date of publication:
**28.06.2023 Bulletin 2023/26**

(21) Application number: **22215104.5**

(22) Date of filing: **20.12.2022**

(51) International Patent Classification (IPC):
**G01N 29/024** (2006.01)

(52) Cooperative Patent Classification (CPC):
**G01N 29/024**; G01N 2291/011; G01N 2291/02809

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.12.2021 GB 202118663**

(71) Applicant: **University College Dublin, National University of Ireland, Dublin**
**Dublin 4 (IE)**

(72) Inventors:
• **LYNCH, Rian**
  **Dublin (IE)**
• **BUCKIN, Vitaly**
  **Dublin (IE)**

(74) Representative: **Appleyard Lees IP LLP**
**15 Clare Road**
**Halifax HX1 2HY (GB)**

(54) **LACTOSE ASSAY METHOD**

(57) A method of determining the concentration of a saccharide in a sample. The method is based on the steps of: a) providing the sample comprising the saccharide; b) treating the sample with an enzyme capable of catalysing a reaction of the saccharide; c) measuring a change in a parameter of the sample indicative of a change in ultrasonic velocity of the sample; d) treating the sample for a second time with the enzyme used in step b) and measuring the change in the parameter of the sample indicative of a change in ultrasonic velocity of the sample; e) obtaining the change in ultrasonic velocity of the sample caused by the reaction by subtracting the change in ultrasonic velocity caused by the second addition of enzyme measured in step d) from the change in ultrasonic velocity caused by the reaction measured in step c); f) obtaining the concentration of the saccharide in the sample prior to step b) from the change in ultrasonic velocity obtained in step e). An ultrasonic meter for carrying out the method is also provided. Also provided is a computer-readable medium comprising code configured to implement the method.

Fig. 3

EP 4 202 432 A1

**Description**

**Field**

The present invention relates to a method for rapid lactose determination in milk using high-resolution ultrasonic spectroscopy (HR-US).

**Background**

Milk is one of the most important consumer products from the dairy industry and a source of high-quality nutrition. Lactose is the major carbohydrate in bovine milk, usually present at concentrations between 4.6 and 4.8 % (w/v) and is an important indicator of quality, contributing to the sensory and functional properties of milk (J. M. Lynch, Barbano, & Fleming, 2007; Yakovleva et al., 2012). Determination of the concentration of lactose in milk and other dairy products is required for compliance with food safety regulations as well as being important for the cheese industry in controlling the fermentation process (Yakovleva et al., 2012). Additionally, lactose intolerant individuals, comprising as much as 70% of the world's population, cannot tolerate ingestion of large quantities of lactose without gastrointestinal upset, and commonly require lactose-reduced or free dairy products (Li, Chen, Xu, Fu, & Gong, 2015). As a result, several methods, using a variety of analytical techniques, have been developed for the determination of lactose content in milk, each with advantages and disadvantages. The most common methods are likely chromatographic methods or spectrophotometric assays. However, methods using IR spectroscopy, polarimetry, gravimetry or biosensors are also well described (Li et al., 2015; J. M. Lynch et al., 2007; Marrakchi, Dzyadevych, Lagarde, Martelet, & Jaffrezic-Renault, 2008). As milk is a complex medium, there are general disadvantages to most methods such as lengthy sample preparation steps (requirements for extraction and filtration of samples) or cost of analysis.

**Summary of the Invention**

It is one aim of the present invention, amongst others, to provide a method that addresses at least one disadvantage of the prior art, whether identified here or elsewhere, or to provide an alternative to existing methods of measuring saccharide contents of samples.

According to aspects of the present invention, there is provided a method, ultrasonic meter and a computer readable medium as set forth in the appended claims. Other features of the invention will be apparent from the dependent claims, and from the description which follows.

According to a first aspect of the present invention, there is provided a method of determining the concentration of a saccharide in a sample, the method comprising the steps of:

a) providing the sample comprising the saccharide;

b) treating the sample with an enzyme capable of catalysing a reaction of the saccharide;

c) measuring a change in a parameter of the sample indicative of a change in ultrasonic velocity of the sample from prior to the treating of the sample with the enzyme until the reaction of the saccharide with the enzyme is substantially complete;

d) after substantial completion of the reaction of the saccharide, treating the sample for a second time with the enzyme used in step b) and measuring the change in the parameter of the sample indicative of a change in ultrasonic velocity of the sample;

e) obtaining the change in ultrasonic velocity of the sample caused by the reaction of the saccharide by subtracting the change in ultrasonic velocity caused by the second addition of enzyme measured in step d) from the change in ultrasonic velocity caused by the reaction measured in step c);

f) obtaining the concentration of the saccharide in the sample prior to step b) from the change in ultrasonic velocity obtained in step e).

The methodology may use a β-galactosidase enzyme to rapidly hydrolyse lactose present in milk, allowing for quantitation of lactose present at reaction completion from precision measurements of ultrasonic velocity in the milk.

The method can also be used to control in real-time the hydrolysis of lactose for the precise preparation of milks with preferred lactose concentrations. The elimination of sample preparation steps and the minimal need for user interaction represent significant time savings over existing methods. Comparison of the ultrasonic results with results from HPLC-RI showed excellent agreement in the determination of lactose in typical skimmed and chocolate milks. The results indicate the applicability of HR-US technology in accurate and precise determination of lactose within the dairy industry.

According to a second aspect of the present invention, there is provided an ultrasonic meter configured to carry out the method according to the first aspect.

According to a second aspect of the present invention, there is provided a computer-readable medium comprising code configured to implement the method according to the first aspect using an ultrasonic meter and/or to implement the calculations of steps e) and f) of the method.

## Detailed Description Of The Example Embodiments

Ultrasonic spectroscopy employs high-frequency (MHz range) waves of compressions and decompressions (longitudinal deformations), which probe the elastic properties of materials determined by intermolecular interactions/forces and their microstructural organization (Buckin, 2018). This monitoring does not require the use of optical transparency, side-reactions, additional consumables or sample pre-treatment. In this work, we have applied HR-US monitoring of enzymatic lactose hydrolysis in the determination of lactose content in different milks. The developed methodology is similar to commonly used spectrophotometric assays in that $\beta$-galactosidase enzyme is used in the determination, however, with the advantages of removing the need for multiple sample preparation/pre-treatment steps, additional reagents or reaction steps, while requiring much less operator input. Most importantly, HR-US measurements are real-time, allowing both determination of lactose content in samples and control of lactose content in the manufacturing of products with specific desirable lactose contents (lactose-free milk for example). The methodology achieves this without sacrificing measurement precision or accuracy in the determination of lactose in typical consumer milks. As such, it could be an extremely useful analytical tool for the dairy industry.

### Materials and methods

### Reagents

The chemical compounds utilized were: $\beta$-D-lactose (purity $\geq$ 99 %, Lot. A0340357, cat. 412985000) from Acros Organics, D-glucose (purity $\geq$ 99.5 %, Lot. SLBJ1796 V, cat. G7528) and D-galactose (purity $\geq$ 99 %, Lot. SKBG8191 V, cat. G0750) from Sigma-Aldrich Co, maltotriose (purity $\geq$ 93 % HPLC grade, Lot. 403141/1) from BioChemika, maltotetraose, (> 90% purity, CAS number 34612-38-9) from Megazyme. Ultrapure Milli Q water (Millipore Super-Q-System which includes 0.22 $\mu$m membrane filter) with resistivity of 18.7 M$\Omega$ cm at 25 °C, was used for preparation of aqueous solutions and calibrations. Potassium hexacyanoferrate (II) trihydrate (Reagent plus, purity $\geq$ 98.5%) and Zinc sulfate heptahydrate (Reagent plus, purity $\geq$ 99%) were used to prepare Carrez I (3.6 g/100 mL) and II (7.2 g/100 mL) solutions for clarification of HPLC milk samples. Aptamil first infant milk 200 mL ready to feed (Aptamil U.K), Mooju chocolate milk (Avonmore, Ireland), Slimline milk fat free (Avonmore, Ireland) and Tesco low fat milk (Tesco, Ireland), were purchased in local supermarkets, used within 24 hours of opening and refrigerated when not in use. A 5 % (w/v) whey solution was prepared from muva-MO-0612 Whey Powder (Muva Kempten), kindly provided by colleagues in the Hungarian Dairy Research Institute. The whey powder has declared 0.77 g lactose per 1 g of powder. AG245 Mettler-Toledo microbalance (Mettler-Toledo Inc.) with repeatability of 0.02 mg was used for preparations and dilutions of samples.

$\beta$-galactosidase from Kluyveromyces Lactis (E.C.3.2.1.23 lactase) was purchased from CHR Hansen (Ha-Lactase 5200, solution, manufacturer declares average activity of 5200 NLU/g). One unit of $\beta$-galactosidase from Kluyveromyces Lactis activity (NLU) is defined as the amount of enzyme that liberates 1.3 $\mu$mol of o-nitrophenol from o-nitrophenyl-$\beta$-D-galactopyranoside (ONPG) per min in P-E-M buffer at pH 6.5 at 30 °C (Institute of Medicine, 1996). The specific activity of the Ha-Lactase ($\beta$-galactosidase from Kluyveromyces Lactis) formulation was measured ultrasonically in ultrasonic activity units, $UU_{37}$, by extrapolation of the initial part of velocity vs time hydrolysis profile to time 0.

A total of 1 $UU_{37}$ of $\beta$-galactosidase activity is defined as the amount of enzyme that hydrolyses 1 $\mu$mol of $\beta$-galactosidic bonds in Aptamil first infant milk (pH 7) per min at 37 °C (R. Lynch et al., 2020). 1 $UU_{37}$ corresponded to 0.93 NLU of activity of Ha-Lactase formulation declared by the enzyme manufacturer. Enzyme concentrations are given as the amount of enzyme in 1 g of reaction solution.

### Removal of glycerol from Ha-Lactase enzyme solution

0.5 mL of enzyme solution was filtered by centrifugation at 14,000 x g for 10 minutes twice using Amicon Ultra-0.5 mL Centrifugal Filters (nominal molecular weight limit of 100,000 Daltons, Merck Millipore) to remove/reduce glycerol present in the enzyme solution. The desalted enzyme was collected by inverting the filter in a clean 0.5 mL centrifuge collection vial at 1000 x g for 1 minute, readjusted to 0.5 mL with MilliQ water and used in reaction injections within 1 hour of preparation.

*Milk samples for measurements*

For the initial measurements (lactose determination with unfiltered β-galactosidase enzyme), four milk samples were analysed: Aptamil first infant milk, Mooju chocolate milk, Tesco low fat milk and 5 % whey solution prepared as described in section 2.1. HPLC and Lactose/D-glucose assay measurements were carried out as described in sections 2.3. and 2.4. HR-US measurements in these samples are described in section 2.5.

For the second set of measurements, lactose determination with glycerol-removed enzyme was investigated in three milks: Aptamil first infant milk, Mooju chocolate milk and Avonmore slimline milk. Three bottles of each milk (Bottle A, B and C) were purchased, with each bottle coming from a separate shop. HR-US and HPLC-RI lactose determination in these milks is also described in sections 2.3. and 2.5.

*HPLC measurements of the concentrations of saccharides in milks*

HPLC with refractive index detector (HPLC-RI) was used in the measurement of the concentrations of lactose and other saccharides (glucose, galactose and GOS) in the same milk stocks measured using HR-US and (for determination with filtered enzyme), in reaction samples from Aptamil, Mooju and Slimline stocks collected in parallel with HR-US measurements of lactose hydrolysis. One sample was taken from each milk reaction at either 60 minutes (Mooju and Slimline) or 90 minutes (Aptamil) reaction time to confirm reaction completion. Sample collection procedure was collection of 5 mL aliquots from the temperature-controlled reaction volume and inactivation of enzyme by boiling for 10 minutes in sealed plastic sample tubes. In the case of unaltered milk samples, 5 mL sample volumes of the unaltered milk were sealed in plastic sample tubes and boiled for 10 minutes. Samples were prepared as follows: 2 mL aliquots were taken from the collected 5 mL aliquots. 1.8 mL water was added to each sample, mixed and incubated at 60 °C for 10 minutes in electronic water bath. 0.1 mL each of Carrez I ($K_4Fe(CN)_6 \cdot 3H_2O$, 3.6 g/100 mL) and Carrez II ($ZnSO_4 \cdot 7H_2O$, 7.2 g/100 mL) solutions were added with mixing after each addition. 1 mL of acetonitrile was added to each sample and mixed gently. Samples were rested for 60 minutes then centrifuged at 6000 rpm for 8 minutes. The supernatant was filtered using syringes equipped with 0.22 um pore size (UltraCruz PVDF 30 mm diameter) filters. 10 $\mu$L injections were carried out on an Agilent 1200 series HPLC system (Agilent Technologies) with refractive index detector (Agilent Technologies). Runs were carried out isocratically (10 minutes, 2 mL/min with 70:30 Acetonitrile:Water as eluent) on an amino ($NH_2$) column (Microsorb-MV 100-5 NH2, 250 × 4.6 mm). The column oven and refractive index detector were maintained at 35 °C throughout operation. Chromatograms were processed using Chemstation software provided with the HPLC. Construction of standard curves of refractive index response (area under the peak) for lactose, glucose/galactose maltotriose (used as standard for all detected trisaccharides) and maltotetraose (used as standard for all detected tetrasaccharides) allowed calculation of saccharides present in milk samples from peak area. Peaks in our HPLC chromatograms were assigned by retention time comparison with mono, di, tri and tetrasaccharide standards (glucose/galactose, lactose, maltotriose and maltotetraose) used for our calibration curves. The uncertainty in single HPLC measurements (error bars in graphs) was estimated from the signal to noise ratio of saccharide peaks in our chromatograms. The % RSD (percentage relative standard deviation) for each measurement was calculated by the method of John W. Dolan (Dolan, 2009). The true value for uncertainty of HPLC measurements includes the uncertainty developed during sample preparation procedures (extractions/dilutions) and may be significantly larger.

*Lactose/ D-glucose enzymatic assay:*

A Lactose/D-Glucose kit (R-Biofarm AG) was kindly provided by colleagues in the Hungarian Dairy Research Institute. Milk samples of Aptamil first infant milk, Mooju chocolate milk, Tesco low fat milk and 5 % whey solution were assayed. Two cuvettes were needed for each milk sample, the first for the determination of lactose in the sample and the second for the determination of D-glucose already present in the sample. Milk samples were clarified and diluted according to the manufacturer's instructions prior to the assay (R-BIOPHARM, 2017). In the first step of the assay, the lactose in the first cuvette is hydrolysed at pH 6.6 to D-glucose and D-galactose by β-galactosidase. Secondly, the D-glucose in both cuvettes is phosphorylated at pH 7.6 by the enzyme hexokinase (HK) and adenosine-50-triphosphate (ATP) to D-glucose-6-phosphate (G-6-P), with the simultaneous formation of adenosine-50-diphosphate (ADP). In the third step, enzyme glucose-6-phosphate dehydrogenase (G6P-DH) is added to both cuvettes and G-6-P is oxidised by nicotinamideadenine dinucleotide phosphate (NADP) to D-gluconate-6-phosphate, with the formation of reduced nicotinamide-adenine dinucleotide phosphate (NADPH). The amount of NADPH formed in the last step is stoichiometrically equivalent to the amount of D-glucose and thus the initial lactose. NADPH is measured by its light absorbance at 340 nm. The amount of lactose is calculated from the difference between the D-glucose concentrations with and without hydrolysis with β-galactosidase (cuvette 1 and 2) (Churakova et al., 2019; R-BIOPHARM, 2017). The enzymatic assay was performed according to manufacturer's instructions and the absorbance of solutions was assayed at 340 nm on a Cary 60 UV-vis spectrophotometer.

*HR-US monitoring of lactose hydrolysis*

Ultrasonic velocity and attenuation were measured using HR-US 102 ultrasonic spectrometer (Sonas Technologies Ltd., Ireland) equipped with precision programmable temperature controller. HR-US 102 contains two 1 mL identical cells, one sample and one reference. The temperature in the cells was controlled within 0.01 °C with difference between the temperatures of the two cells below $10^{-4}$ °C. Screw caps tightened on top of the cells helped to avoid evaporation. Ultrasonic measurements were performed at various frequencies between 2 and 9 MHz using differential measuring regime. The reproducibility of the measurements of the difference in velocity in the measuring and the reference cells was ± 0.0002 m/s for ultrasonic velocity. Calibration was carried out with Milli Q water with reference values 1523.65 m/s and $1.63 \times 10^{-14}$ $s^2$/m for ultrasonic velocity and attenuation coefficient (attenuation divided by square of frequency) respectively (Landolt-Börnstein, 1967; Marczak, 1997). Before measurement, all samples were degassed in a 10 mL disposable plastic syringe with attached pressurized cap. As the measured change in ultrasonic velocity caused by the analysed reactions did not depend on the frequency, only data for one frequency (5 MHz) are presented in figures.

*Ultrasonic Reaction Profiles for unfiltered enzyme reactions*

The measuring and reference cell of HR-US 102 spectrometer were filled with 1.1 mL of milk to be analysed, using a Hamilton syringe fitted with precision Chaney adaptor. After temperature equilibration, 5 μL of β-galactosidase from *Kluyveromyces Lactis* (Ha-Lactase) (resulting in final enzyme concentration of 19.6 $UU_{37}$/g) was added to the measuring cell through a rubber septum in the cap using a Hamilton syringe fitted with precision Chaney adaptor. The sample was immediately stirred using a mechanical mini stirrer for 30 s and ultrasonic velocity and attenuation measured continuously over the whole time of reaction.

*Ultrasonic Reaction Profiles for glycerol-removed reactions*

The measuring and reference cell of HR-US 102 spectrometer were filled with 1.1 mL of milk to be analysed using a Hamilton syringe fitted with precision Chaney adaptor. After temperature equilibration, 25 μL of β-galactosidase from *Kluyveromyces Lactis* (Ha-Lactase) (resulting in final enzyme concentration of 98 $UU_{37}$/g) which was filtered to remove glycerol (see section 2.1.) was added to the measuring cell through a rubber septum in the cap using a Hamilton syringe fitted with precision repeating syringe dispenser (PB 600, Hamilton). The sample was immediately stirred using a mechanical mini stirrer for 30 s and ultrasonic velocity and attenuation measured continuously over the whole time of reaction.

*Contribution of enzyme injection to ultrasonic velocity*

*Contribution of unfiltered enzyme*

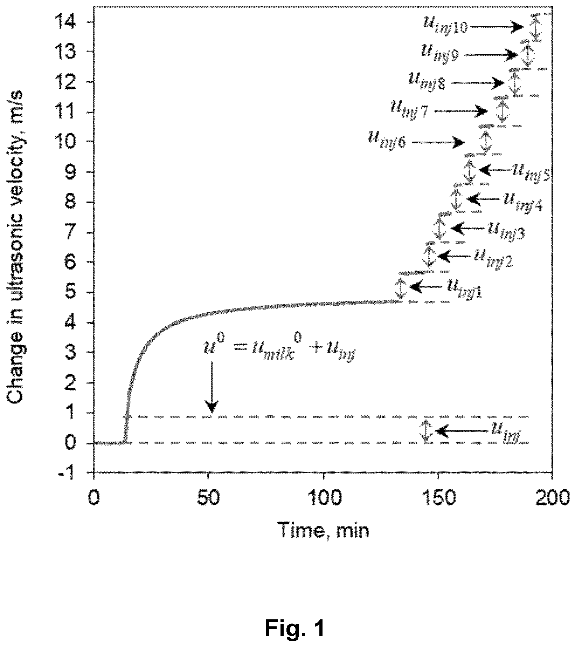

Figure 1 shows measurement of the contribution to ultrasonic velocity of injection of 5 μL of β-galactosidase from *Kluyveromyces Lactis* (Ha-Lactase) (resulting in final enzyme concentration of 19.6 $UU_{37}$/g) into Aptamil first infant milk at 37 °C.

The contribution of enzyme injection to ultrasonic velocity, $u_{inj}$, independent of the change in velocity caused by the hydrolysis reaction, represents a source of uncertainty in our ultrasonic lactose determination. The primary contribution to ultrasonic velocity of the enzyme injection was provided by glycerol (a common preservative for enzyme solutions). Hence, the contribution of the injection was determined by repeated additional injections of β-galactosidase into the reaction sample once reaction equilibrium was observed (Figure 1) and used to determine $u^0$, the ultrasonic velocity at time zero, by addition of velocity contribution of enzyme preparation to the velocity of the milk pre-injection, $u_{milk}^0$ such that:

$$u^0 = u_{milk}{}^0 + u_{inj} \quad (1)$$

The change in ultrasonic velocity caused by the hydrolysis reaction in Aptamil first infant milk is ~4 m/s. As the ultrasonic velocity of the sample is on the level of ~1543 m/s, the change in velocity caused by the hydrolysis reaction is only 0.26 % of the initial value. Thus, the velocity contribution of the enzyme itself to the medium is the same, whether measured before or after the hydrolysis reaction. The contribution of enzyme injection was measured 10 times in each milk sample for the first part of the study. The results are shown in Table 1. For the most part, the measurement of the contribution of the enzyme injection was highly reproducible with standard deviation less than 2.5 % for Aptamil, Tesco low fat and 5 % whey solutions samples. Some difficulties were encountered measuring the contribution of enzyme injection in the Mooju sample. The Mooju milk was easy to disturb when stirring after the injection of the enzyme, creating bubbles which affect the ultrasonic velocity of the sample. More careful stirring as well as the measurement of more injection contributions will significantly reduce this error. Importantly, the average contribution of the enzyme injection to the Mooju milk was in line with that observed for the other three milk samples.

| Table 1: Contribution of 5 $\mu$L injection of Ha-Lactase ($\beta$-galactosidase) to ultrasonic velocity (m/s) in various milk at 37 °C. | | | | |
|---|---|---|---|---|
| Injection | Aptamil first infant milk | Mooju chocolate milk | Tesco low fat milk | 5% whey solution |
| 1 | 0.950349097 | 1.220463499 | 0.997261477 | 0.983135057 |
| 2 | 0.981935103 | 1.023516853 | 0.975803483 | 0.989696768 |
| 3 | 0.957711839 | 0.86741846 | 0.984466927 | 0.987065288 |
| 4 | 0.931324008 | 0.731045357 | 0.958578125 | 0.961810717 |
| 5 | 0.978470609 | 1.097951466 | 0.971572745 | 0.963273248 |
| 6 | 0.936255141 | 0.615063574 | 0.975604601 | 0.950251315 |
| 7 | 0.938920892 | 1.12720394 | 0.936555462 | 0.954714741 |
| 8 | 0.908767715 | 0.646181958 | 0.942452753 | 0.964975399 |
| 9 | 0.919961574 | 0.894406768 | 0.958146029 | 0.967042075 |
| 10 | 0.9318914 | 1.085889481 | 0.924859502 | 0.941954438 |
| Avg | 0.943558738 | 0.930914136 | 0.96253011 | 0.966391905 |
| *Std. Dev, m/s | 0.022507582 | 0.202239615 | 0.02155941 | 0.015093196 |
| *Std. Dev, % | 2.385392742 | 21.72484093 | 2.239868594 | 1.561809024 |
| *Standard deviation. | | | | |

*Contribution of filtered enzyme with glycerol removed*

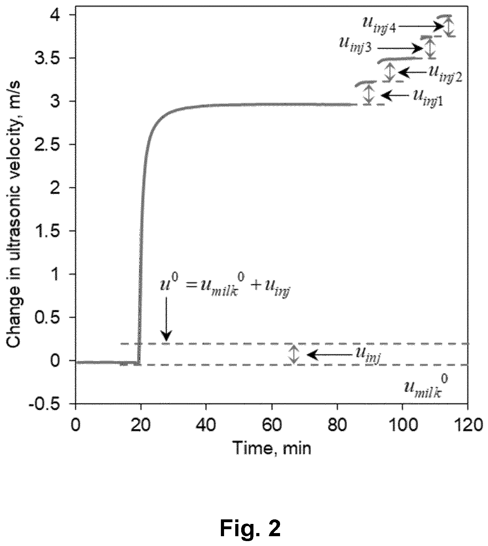

In the second part of the study, the filtration described in section 2.1. aimed to remove the glycerol from the enzyme solution to minimise the change in ultrasonic velocity caused by the enzyme solution itself and also to allow the use of higher concentrations of enzyme, resulting in a faster measurement. Although the same procedure was followed for the preparation of enzyme solutions used in all reactions, the glycerol removed was not consistent, thus requiring the determination of enzyme contribution for each reaction sample measured (Table 2). The measurement of injection contribution was still highly reproducible in glycerol-removed enzyme injections (Figure 2) and enzyme activity after the removal of glycerol remained unchanged with no losses due to filtration, and was consistent for all reactions. Ideally, a $\beta$-galactosidase solution which does not contain glycerol could be used in ultrasonic measurements, eliminating the need for filtration and further reducing the uncertainty of the measurement. Alternatively, $\beta$-galactosidase enzymes are available as lyophilised powders which can be dissolved in water and would allow glycerol-free enzyme injections.

| Table 2: Average contribution of injection of 25 $\mu$L glycerol-removed Ha-Lactase enzyme to ultrasonic velocity in various milk at 37 °C. | |
|---|---|
| Milk sample | Average contribution of enzyme injection (25 $\mu$L), m/s. |
| Aptamil A | -0.3251 |
| Aptamil B | 0.4390 |
| Aptamil C | 0.5644 |

(continued)

| Table 2: Average contribution of injection of 25 μL glycerol-removed Ha-Lactase enzyme to ultrasonic velocity in various milk at 37 °C. | |
|---|---|
| Milk sample | Average contribution of enzyme injection (25 μL), m/s. |
| Mooju A | 0.0143 |
| Mooju B | 0.1407 |
| Mooju C | 0.1378 |
| Slimline A | -0.2456 |
| Slimline B | 0.3283 |
| Slimline C | 0.2547 |

Figure 2 shows the measurement of the contribution to ultrasonic velocity of injection of 25 μL of glycerol-removed β-galactosidase from Kluyveromyces Lactis (Ha-Lactase) (resulting in final enzyme concentration of 98 $UU_{37}$/g) into Slimline milk at 37 °C.

As can be seen from Figure 2 and Table 2, the removal of glycerol from the Ha-Lactase enzyme solution significantly reduces the contribution of the injection to ultrasonic velocity. In the absence of glycerol removal, 25 μL of enzyme would be expected to result in a velocity contribution of ~5 m/s. As the change in velocity due to hydrolysis is in the range 3-4 m/s, even 2 % uncertainty in the contribution of the injection would introduce significantly more uncertainty into the determination of lactose measurement. The filtration of the enzyme results in a velocity contribution at least 10 times less than the expected value, significantly reducing the uncertainty contribution by injection velocity. The effects of this are discussed in the Results and Discussion section.

*Results and discussion*

*HR-US measurements of lactose hydrolysis in milk*

The fundamentals of ultrasonic measurements of lactose hydrolysis in infant milks have previously been described in detail (Altas et al., 2016; R. Lynch et al., 2020). The process can be presented for milks in general by the following scheme describing the hydrolysis of a β-galactosidic -*O*- bond:

$$R_1 - O - R_2 + H_2O \ \square \ R_1 - OH + HO - R_2 \qquad (A)$$

where $R_1$ and $R_2$ represent galactose and glucose moieties. At intermediate stages, the hydrolysis of lactose is accompanied by the synthesis of galacto-oligosacharides (GOS), which are subsequently hydrolysed. Hydrolysis of GOS is also represented by Reaction (A) where $R_1$ is a galactose moiety and $R_2$ is another saccharide. Reverse reaction A represents the synthesis of GOS. The amount of GOS produced is heavily dependent on the initial concentration of lactose ((Rodriguez-Colinas, Fernandez-Arrojo, Ballesteros, & Plou, 2014) and as such, is expected to be low in most milks where lactose concentration is approximately 5 % w/v (Mangan et al., 2019). Furthermore, with the subsequent hydrolysis of GOS at later reaction stages, the final concentration of GOS in typical lactase-treated milk is expected to be negligible, thus allowing lactose determination by enzymatic assay methods, used currently in spectrophotometric assays with minimal error (J. M. Lynch et al., 2007).

The hydrolysis of β-galactosidic bonds is accompanied by a change in the intrinsic properties (volume) of atomic groups involved in the reaction and by their hydration, changing the compressibility and density of the mixture, and affecting the ultrasonic velocity, which is thus proportional to the concentration of bonds hydrolysed (Altas et al., 2016; Buckin, 2018; Buckin & Altas, 2017; Resa & Buckin, 2011). The change in ultrasonic velocity in the reaction mixture, $\delta u(t)$, during time interval $\delta t$ at reaction time $t$, is linked with the change in concentration of bonds hydrolysed $\delta c_{bh}(t)$, within the same time interval by:

$$\delta u(t) = u_0 \Delta a_r \delta c_{bh}(t) \qquad (2)$$

where $\Delta a_r$ is the concentration increment of ultrasonic velocity of the reaction defined as:

$$\Delta a_r = \frac{1}{u_0}\frac{du}{dc_{bh}}$$ (3)

and $u_0$ is the ultrasonic velocity in the reaction medium without reactants and products. The concentration of bonds hydrolysed is linked with the concentration of bonds hydrolysable by the enzyme in the reaction mixture at time zero $c_b^0$ and time $t$, $c_b(t)$, as: $c_{bh} = c_b^0 - c_b(t)$. In non-concentrated mixtures, in the absence of specific interactions between the reactants and products, the value of $\Delta a_r$ is expected to be constant during the reaction (Altas et al., 2016; Buckin & Altas, 2017). In this case, the concentration $c_{bh}(t)$ can be obtained as:

$$c_{bh}(t) = \frac{u(t)-u^0}{u_0\Delta a_r}$$ (4)

where $u^0$ is ultrasonic velocity in the medium at reaction time zero. The concentration increment of ultrasonic velocity for the reaction of lactose hydrolysis in infant milks has previously been calculated with high precision:

$$\Delta a_r(T_c) = 0.01812 - 2.0034\times 10^{-4}T_c + 1.4713\times 10^{-6}T_c^2$$ (5)

expressed in units of kg/mol, where $T_c$ is the temperature in Celsius (Altas et al., 2016). This yields a value for $\Delta a_r$ of $0.0127 \pm 0.0004$ kg/mol at 37 °C. The same value of $\Delta a_r$ holds for application in all milks used in this study.

*Ultrasonic lactose determination with unfiltered enzyme*

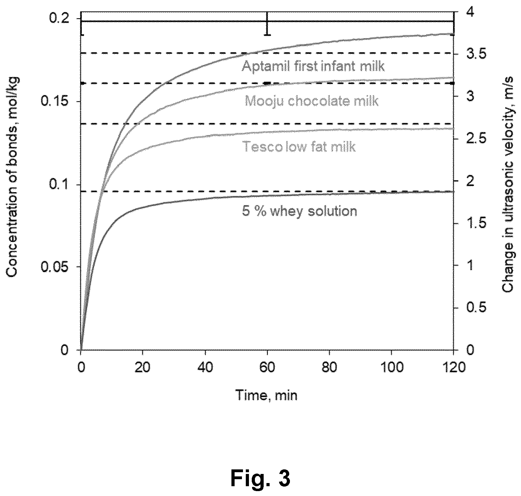

Figure 3 shows the change in ultrasonic velocity in four different milk samples on addition of β-galactosidase, which results from the hydrolysis of β-galactosidic linkages in lactose (and other GOS). Figure 3: Ultrasonic lactose determination of milks assayed with 25 μL Ha-Lactase β-galactosidase at 37 °C. Dashed lines: HPLC-RI determined lactose concentration of the same milk samples. Full line: HPLC-RI determined concentration of β-galactosidic bonds in Aptamil first infant milk. In Mooju chocolate milk, Tesco low fat milk and 5 % whey solution, no GOS were detected in chromatograms, hence no solid line is depicted. Error bars represent the HPLC uncertainty in concentration of β-galactosidic bonds for each milk, calculated as described in section 2.3. (only visible in Aptamil).

Equation (4) provides the concentration of bonds hydrolysed, $c_{bh}(t)$ from the ultrasonic velocity reaction curves, which at reaction completion (reaction curve plateau) is equal to $c_b^0$ and in the absence of other hydrolysable saccharides, $c_l^0$, the concentration of lactose.

For ultrasonic determinations of lactose, the initial concentration of bonds, $c_b^0$, in each milk was considered equivalent to the concentration of lactose, $c_l^0$, (the concentration of GOS was assumed to be 0) and converted into lactose content in grams per litre of milk by the following:

$$Lactose\ g\ L^{-1} = c_l^0 \times M_{lactose}\ \rho$$ (6)

where $\rho$ is the density of the milk sample and $M_{lactose}$ is the molecular weight of lactose, equal to 0.3423 kg mol$^{-1}$. The densities of Aptamil, Mooju and Slimline milk were measured at 37 °C and had respective values of 1.02712 kg L$^{-1}$, 1.05291 kg L$^{-1}$ and 1.031604 kg L$^{-1}$. The densities of tesco low fat milk and the 5 % whey solution were assumed to be 1.03 kg L$^{-1}$.

The time of reaction plateau for each milk was 120 min (Aptamil), 100 min (Mooju), 80 min (Tesco low fat) and 80 min (5 % whey solution). $u_0$ for Aptamil first infant milk, Mooju chocolate milk, Tesco low fat milk and the 5 % whey solution were 1542, 1569, 1546 and 1538 m/s respectively. The deviation of $u_0$ from the ~1540 m/s range in Mooju chocolate milk is due to the presence of a large concentration of other saccharides present in the milk as well as lactose (added sucrose and fructose). The crossing horizontal lines in the figure represent the HPLC-RI determined concentrations of β-galactosidic bonds (solid lines), comprised of lactose and GOS, and the determined concentration of β-galactosidic bonds, comprised only of lactose (GOS excluded (Aptamil) or not detected (Mooju, Tesco, Whey)).

$$K = \frac{[glu][gal]}{[lactose][H_2O]}$$

From literature, the equilibrium constant, , for lactose hydrolysis at 37 °C is 34.8 ± 3.2 (Goldberg & Tewari, 1989). The activity coefficients of water and saccharides, within the concentration ranges found in milk, approach 1 as described previously (R. Lynch et al., 2020). From this, for a starting concentration of lactose of 0.2 M (approx. conc of lactose in Aptamil first infant milk, highest concentration of lactose tested) and water concentration 49.79 M (87.8 % (w/w) in Aptamil), the equilibrium reaction extent of hydrolysis of lactose is 99.6 % (in the absence of added GOS, GOS produced are intermediates and if assumed to be hydrolysable, do not affect the equilibrium level). As such, the presence of equilibrium (reaction completion) concentration of lactose in our determinations can be neglected and we can assume that all lactose present is hydrolysed.

| Table 3: The concentration of lactose in milk determined by HR-US with unfiltered enzyme, D-Glucose assay, and HPLC-RI: | | | |
|---|---|---|---|
| Sample | Declared Sugar, g/L (of which lactose) | HPLC lactose, g/L | HR-US lactose, g/L | D-Glucose assay lactose, g/L |
| Aptamil first infant milk | 72 (70) | 62.93 | 67.37 | 68.78 |
| Mooju chocolate milk | 100.5 (ND) | 57.80 | 56.63 | 57.43 |
| Tesco low fat milk | 48 (ND) | 48.10 | 47.15 | 48.51 |
| 5 % whey solution | 39 | 33.71 | 33.30 | 33.71 |
| ND: Not declared. | | | |

The concentration of lactose in each of the four milk samples as determined by HPLC, D-Glucose/Lactose assay and HR-US is presented in Table 3. There was excellent agreement between all techniques in measurements of lactose in milks without initial GOS present (Mooju, Tesco, Whey). GOS are commonly added to infant formula (including Aptamil first infant milk) to mimic the beneficial effects of human milk oligosaccharides in breast milk (Vandenplas, De Greef, & Veereman, 2014). In the HR-US and D-glucose assay lactose determinations in Aptamil first infant milk, GOS hydrolysed in the sample are assumed to be lactose, resulting in overestimation of lactose present, exceeding the HPLC-obtained value by 6.2 - 9.2 %. However, if even a rough estimate of the GOS present is possible, this overestimation can be significantly reduced. The uncertainty of the HR-US determination (discussed in section 3.4) was better than that of the D-glucose/Lactose assay for all milks, despite the contribution to uncertainty by the velocity of the enzyme injection. This uncertainty can be improved with the removal of glycerol from the enzyme solution, reaching or exceeding that of HPLC-RI.

*Ultrasonic lactose determination with glycerol-removed enzyme*

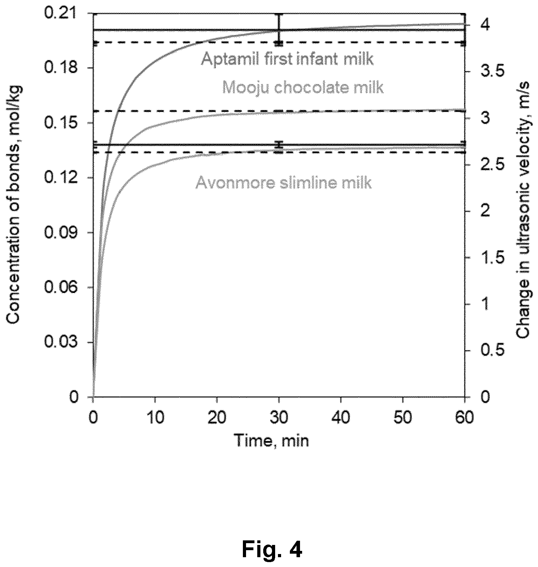

Figure 4: Curves: Ultrasonic lactose determination of milks assayed with glycerol-removed Ha-Lactase β-galactosidase (98 $UU_{37}$/g) at 37 °C. Dashed lines: HPLC-RI determined lactose concentration of the same milk samples. Full lines: HPLC-RI determined concentration of β-galactosidic bonds in the same milk samples. In Mooju chocolate milk, no GOS were detected in chromatograms before or after 60 minutes reaction with enzyme, hence no solid line is depicted. Error bars represent the HPLC uncertainty in concentration of β-galactosidic bonds for each milk, calculated from the signal to noise ratio of peaks as described in section 2.3.

Figure 4 shows the ultrasonic reaction profiles for the determination of lactose in Aptamil, Mooju and Avonmore slimline milk using 98 $UU_{37}$/g of Ha-Lactase β-galactosidase, filtered to remove glycerol as described in section 2.1. The concentration of lactose was determined at the reaction end point (reaction plateau) corresponding to 60, 60 and 90 minutes of reaction for Avonmore slimline, Mooju and Aptamil first infant milks respectively. HPLC measurements of the concentration of lactose (dashed lines) or bonds (solid lines) largely agree with the HRUS-determined concentration of β-galactosidic bonds.

$$c_b^0 = c_l^0$$

In Avonmore slimline milk, the amount of lactose determined by HR-US at 60 minutes, assuming $c_b^0 = c_l^0$, slightly (by 2 - 5 %) exceeded the amount of lactose determined by HPLC. Trace disaccharide GOS were detected in the chromatograms for slimline milk in this sample stock (stock A) (included in the solid line as bonds) but were not detected in the sample stock treated with β-galactosidase (60 minutes reaction), meaning they likely underwent enzymatic hydrolysis. Trace disaccharide GOS were detected by HPLC in stocks A and B of slimline milk (each run once), but not stock C (run three times). The presence of GOS can result in overestimation of the lactose present, but in trace amounts, the overestimation is likely below 1.0 % of the determined value, which is within the uncertainty of the measurement (3 - 3.5 %, see section 3.4). In Mooju chocolate milk, no GOS were detected in chromatograms before or after 60 minutes reaction with enzyme, hence no solid line is depicted in the figure. No lactose was detected in Mooju or Slimline milk chromatograms after 60 minutes reaction with enzyme. Excellent agreement was observed between HR-US and HPLC determined lactose concentration as a result.

Lactose determination in Aptamil first infant milk was overestimated by HR-US as previously discussed in section 3.2 due to the presence of GOS in the milk prior to the measurement (by 6 - 9 %). Di, tri and tetra GOS were detected in chromatograms of Aptamil first infant milk in low concentrations, however not all were hydrolysable by our enzyme, some remaining unaltered after 90 minutes of reaction. As discussed in section 3.2, even approximate knowledge of the amount of GOS present will reduce the overestimation of lactose content significantly. The manufacturer declares 7.2 g/L of GOS in Aptamil first infant milk. Not all of these GOS will be hydrolysable by β-galactosidase, but a basic assumption that half of the GOS present will be hydrolysed allows reduction in HR-US calculated lactose to within 3 % of the HPLC-determined value. The solid line for Aptamil first infant milk represents the concentration of bonds detected by HPLC that were determined to be hydrolysable (lactose + GOS concentration reducible after hydrolysis). The presence of multiple GOS and the low concentrations detected result in the relatively large ($\pm 0.008$ mol/kg, $\pm 4$ %) uncertainty for HPLC-determined concentration of bonds shown in the figure (calculated as described in section 2.3.).

| Table 4: Results obtained for lactose analysis in milk samples using HPLC and HR-US. | | | | | |
|---|---|---|---|---|---|
| Sample | Declared Sugar, g/L (of which lactose) | HPLC lactose, g/L | [a]HR-US lactose, g/L | HPLC β-galactosidic bonds, mol/kg | HR-US β-galactosidic bonds, mol/kg |
| Aptamil A | 72 (70) | 59.47 | 64.81[c] | 0.186 | 0.184[c] |
| Aptamil B | 72 (70) | 66.88 | 71.52 | 0.201 | 0.203 |
| Aptamil C | 72 (70) | 67.96[b] | 72.23 | 0.204[b] | 0.205 |
| Mooju A | 103 (ND) | 56.09 | 55.65[d] | 0.156 | 0.154[d] |
| Mooju B | 103 (ND) | 55.89[b] | 57.30 | 0.155[b] | 0.159 |
| Mooju C | 103 (ND) | 56.40[b] | 57.67 | 0.156[b] | 0.160 |
| Slimline A | 52 (ND) | 47.23 | 48.29[c] | 0.138 | 0.137[c] |
| Slimline B | 52 (ND) | 49.94[b] | 51.06 | 0.139[b] | 0.145 |
| Slimline C | 52 (ND) | 47.49 | 49.98 | 0.137 | 0.142 |
| ND: Not declared. [a]Detected lactose calculated assuming all bonds are from lactose. [b]Average of 3 runs [c]Average of 4 runs [d]Average of 2 runs | | | | | |

Table 4 shows the results obtained from our HR-US determinations of lactose content in Aptamil first infant milk, Mooju chocolate milk and Avonmore Slimline milk, and compares them with HPLC-RI measurements in the same milk samples. There was excellent agreement between HPLC and HR-US results in measurements of the concentration of β-galactosidic bonds in each milk. Aptamil A had an unusually low concentration of lactose but as the value was lower than expected for both techniques, the reason was expected to be a manufacturing outlier.

Similarly, there was excellent agreement between the two techniques in determination of lactose in Mooju and Slimline. The overestimation in lactose in Aptamil as discussed previously can be accounted for with even approximate knowledge of GOS content in the milk. The calculation of uncertainty in HR-US lactose determination (2.8 - 4.2 % in $c_l^0$) is discussed in section 3.4 but is close to the relative standard deviation of HPLC-RI (twice or less the HPLC value of 2.1 % RSD).The uncertainty associated with HPLC-RI lactose determination was estimated from the literature data on % RSD of HPLC-RI from Churakova et al., 2019 (Churakova et al., 2019). In reality, the value of uncertainty of HPLC-RI is likely higher than the relative standard deviation due to the extensive sample handling during preparation/extraction procedures.

*Uncertainty in ultrasonic lactose determination*

The uncertainty in ultrasonic lactose determination can be determined from Equation (7), which is equation (4) at reaction equilibrium and accounting for equilibrium concentration of lactose:

$$c_b^{\ 0} = \frac{c_{bh} = \dfrac{u - u^0}{u_0 \Delta a_r}}{0.996}, \text{ at reaction completion} \qquad (7)$$

from the uncertainty in each of the parameters of the equation. The total change in velocity, $\Delta u = u - u^0$ ranges from 1.8 - 4 m/s depending on the milk analysed (higher velocity for higher concentration of lactose). The primary contribution to uncertainty in this parameter is the uncertainty in the contribution of the enzyme injection. The uncertainty in the velocity of the enzyme injection was in the range 0.015 - 0.023 m/s, resulting in relative uncertainty of 0.4 - 1.2 % in $\Delta u$ for the unfiltered enzyme experiments. Uncertainty in velocity of the enzyme injection in the filtered enzyme experiments was in the range 0.003 - 0.014 m/s, resulting in relative uncertainty of 0.17 - 0.78 % in $\Delta u$. The reduction in the uncertainty of enzyme injection by filtering/removing glycerol is approximately half and also allowed the use of five times the concentration of enzyme. There is also a minor contribution in the limiting precision of HR-US ($\pm$ 0.2 mm/s), however by itself, this contributes less than 0.01 % relative uncertainty to $\Delta u$ . The total relative uncertainty in $\Delta u$ is thus 0.17 - 1.2 % depending on whether the enzyme had glycerol removed or not. The uncertainty in $u_0$ is also due to the limiting precision of $\pm$ 0.2 mm/s. $u_0$ in these experiments was 1542 m/s (Aptamil), 1569 m/s (Mooju), 1546 m/s (Tesco low fat milk), 1538 m/s (5 % whey solution), 1553 m/s (Avonmore slimline milk). As such, the relative uncertainty in $u_0$ is negligible. For $\Delta a_r$ = 0.0127 $\pm$ 0.0004 kg/mol , the uncertainty of the measurement is the most significant contributor to the uncertainty of the lactose determination, equal to 3.15 %. Improvements in the precision of the determination of $\Delta a_r$ will allow a significant reduction in uncertainty of the lactose determination. Overall, the total uncertainty in ultrasonic lactose determination (uncertainty in $c_{bh}$) is on the level of 3.3 - 4.4 %.

Separate from the uncertainty of parameters of equation (7) is uncertainty due to the presence of hydrolysable GOS in the milk sample prior to the start of the determination. GOS in typical consumer bovine milks (not infant milks) are only present in trace amounts (100 mg/L in mature (commercial) milk) (Robinson, 2019). As such, the presence of the GOS in these milks may be neglected. For GOS-fortified milks (infant milks), a more specific $\beta$-galactosidase enzyme, with low affinity for GOS, can be used for reduction in the uncertainty in lactose determination, an example has been described by Mangan, 2019 (Mangan et al., 2019). Alternatively, if GOS concentrations are approximately known, correction of the HR-US determined lactose can be carried out with reasonable precision.

The data of Churakova used to estimate the uncertainty in HPLC-RI and Lactose/D-glucose assay is shown in Table 5.

As can be seen from the table, for common lactose-determining techniques (HPAEC, HPLC-RI and Lactase R-Biofarm spectrophotometric assays), the standard deviation in lactose determination is in the range of 2 - 5 %. The relative standard deviation in ultrasonic lactose determination was calculated from results in Aptamil first infant milk and Avonmore Slimline milk. HR-US was highly competitive in comparison to other analytical techniques for determination of lactose content, outperforming lactose spectrophotometric assays and HPLC methods in terms of relative standard deviation.

| Table 5: Lactose determined in 4.65 % (w/w) lactose semi-skimmed milk by various analytical techniques and accompanying uncertainty (% RSD). Table adapted from Churakova, 2019. HR-US additions as determined in Avonmore Slimline milk and Aptamil first infant milk. | | |
|---|---|---|
| Method | Lactose concentration | |
| | % (w/w) | RSD (%) |
| HPAEC-PAD | 4.65 | 2.5 |
| HPLC-RI | 4.77 | 2.1 |

(continued)

| Table 5: Lactose determined in 4.65 % (w/w) lactose semi-skimmed milk by various analytical techniques and accompanying uncertainty (% RSD). Table adapted from Churakova, 2019. HR-US additions as determined in Avonmore Slimline milk and Aptamil first infant milk. | | |
| --- | --- | --- |
| Method | Lactose concentration | |
| | % (w/w) | RSD (%) |
| NMR | 4.67 | 0.4 |
| Lactose/D-Glucose (R-Biofarm) | 4.57 | 5.1 |
| Lactose/D-Galactose (R-Biofarm) | 4.36 | 3.0 |
| YSI biosensor | 4.80 | 0.9 |
| Biomilk 300 biosensor | 3.83 | 10 |
| HR-US Aptamil milk[a] | 6.31 | 1.17* |
| HR-US Slimline milk[b] | 4.68 | 0.28* |
| RSD: Relative standard deviation determined from 6 samples. *RSD determined from 4 samples. [a]Data of Aptamil A, Table 4. [b]Data of Avonmore Slimline milk A, Table 4. | | |

Additionally, HR-US has the benefit of requiring very little sample handling in its methodology for lactose determination; milk is added with a precision syringe to the measuring cell, allowed to equilibrate with temperature of the cell and then enzyme is injected, again with a precision syringe. The common lactose-determining techniques described above require quite significant sample handling which can easily incorporate significant uncertainty into the measurements. Samples for HPAEC-PAD must be diluted to a lactose concentration of ~ 1 mg/L and ultrafiltrated. Samples for HPLC-RI must be clarified (removal of fat and protein from milk), diluted and filtered to obtain a measurable sample. Spectrophotometric assays require similar procedures for sample preparation as HPLC-RI and then additionally feature several pipetting, mixing, and measuring steps in the actual lactose-determining procedure.

*Conclusions*

Compared to chromatography and spectrophotometric assay detection of lactose, high-resolution ultrasonic spectroscopy represents a simpler, cheaper, and more rapid alternative method for quantification of lactose content in suitable milks (those lacking GOS). The application of the methodology requires no sample pre-treatment steps (derivatisation, clarification, filtration etc), standard preparation steps or extensive consumables, and the waste generated ($\beta$-galactosidase enzyme and milk) is non-hazardous. Further development of the method would allow the presence of GOS in milks to be accounted for and expand the applicability of the method even more. The uncertainty in ultrasonic lactose determination was better than with commonly used Lactose/D-glucose spectrophotometric assay and highly competitive with the uncertainty in HPLC-RI lactose determination. Overall, the potential of HR-US technology for routine lactose determination in milks is very promising.

*References*

Altas, M. C., Kudryashov, E., & Buckin, V. (2016). Ultrasonic Monitoring of Enzyme Catalysis; Enzyme Activity in Formulations for Lactose-Intolerant Infants. Anal Chem, 88(9), 4714-4723. doi:10.1021/acs.analchem.5b04673

Buckin, V. (2018). High-resolution ultrasonic spectroscopy. Journal of Sensors and Sensor Systems, 7(1), 207-217. doi:10.5194/jsss-7-207-2018

Buckin, V., & Altas, M. C. (2017). Ultrasonic Monitoring of Biocatalysis in Solutions and Complex Dispersions. Catalysts, 7(11). doi:10.3390/catal7110336

Churakova, E., Peri, K., Vis, J. S., Smith, D. W., Beam, J. M., Vijverberg, M. P., ... Winter, R. T. (2019). Accurate analysis of residual lactose in low-lactose milk: Comparing a variety of analytical techniques. International Dairy Journal, 96, 126-131. doi:10.1016/j.idairyj.2019.02.020

Dolan, J. W. (2009). Calibration Curves, Part II: What are the Limits? LCGC North America, 27(4), 306-312.

Goldberg, R. N., & Tewari, Y. B. (1989). A calorimetric and equilibrium investigation of the hydrolysis of lactose. Journal of Biological Chemistry, 264(17), 9897-9900. doi:10.1016/s0021-9258(18)81743-4

Institute of Medicine. (1996). Food Chemicals Codex: Fourth Edition (Vol. IV). Washington, DC: National Academy Press.

Landolt-Börnstein. (1967). Zahlenwerte und Funktionen aus Naturwissen-schaften und Technik (W. v. Schaaffs Ed.). Berlin: Springer-Verlag.

Li, M., Chen, J., Xu, J., Fu, S., & Gong, H. (2015). Determination of Lactose in Milk by Raman Spectroscopy. Analytical Letters, 48(8), 1333-1340. doi:10.1080/00032719.2014.979358

Lynch, J. M., Barbano, D. M., & Fleming, J. R. (2007). Determination of the Lactose Content of Fluid Milk by Spectrophotometric Enzymatic Analysis Using Weight Additions and Path Length Adjustment: Collaborative Study. Journal of AOAC International, 90(1).

Lynch, R., Burke, A., Byrne, J., & Buckin, V. (2020). Osmolality and molar mass of oligosaccharides in breast milks and infant formula during hydrolysis of lactose. Application of high-resolution ultrasonic spectroscopy. Food Chem, 322, 126645. doi:10.1016/j.foodchem.2020.126645

Mangan, D., McCleary, B. V., Culleton, H., Cornaggia, C., Ivory, R., McKie, V. A., ... Kargelis, T. (2019). A novel enzymatic method for the measurement of lactose in lactose-free products. J Sci Food Agric, 99(2), 947-956. doi:10.1002/jsfa.9317

Marczak, W. (1997). Water as a standard in the measurements of speed of sounds in liquids. The Journal of the Acoustical Society of America, 102. doi:doi.org/10.1121/1.420332

Marrakchi, M., Dzyadevych, S. V., Lagarde, F., Martelet, C., & Jaffrezic-Renault, N. (2008). Conductometric biosensor based on glucose oxidase and beta-galactosidase for specific lactose determination in milk. Materials Science and Engineering: C, 28(5-6), 872-875. doi:10.1016/j.msec.2007.10.046

R-BIOPHARM, B. M. (2017). Lactose/D-Glucose UV-method for the determination of lactose and D-glucose in foodstuffs and other materials. In. Darmstadt: R-Biopharm AG.

Resa, P., & Buckin, V. (2011). Ultrasonic analysis of kinetic mechanism of hydrolysis of cellobiose by beta-glucosidase. Anal Biochem, 415(1), 1-11. doi:10.1016/j.ab.2011.03.003

Robinson, R. C. (2019). Structures and Metabolic Properties of Bovine Milk Oligosaccharides and Their Potential in the Development of Novel Therapeutics. Front Nutr, 6, 50. doi:10.3389/fnut.2019.00050

Rodriguez-Colinas, B., Fernandez-Arrojo, L., Ballesteros, A. O., & Plou, F. J. (2014). Galactooligosaccharides formation during enzymatic hydrolysis of lactose: towards a prebiotic-enriched milk. Food Chemistry, 145, 388-394. doi:10.1016/j.foodchem.2013.08.060

Vandenplas, Y., De Greef, E., & Veereman, G. (2014). Prebiotics in infant formula. Gut Microbes, 5(6), 681-687. doi:10.4161/19490976.2014.972237

Yakovleva, M., Buzas, O., Matsumura, H., Samejima, M., Igarashi, K., Larsson, P. O., ... Danielsson, B. (2012). A novel combined thermometric and amperometric biosensor for lactose determination based on immobilised cellobiose dehydrogenase. Biosens Bioelectron, 31(1), 251-256. doi:10.1016/j.bios.2011.10.027

Although a few preferred embodiments have been shown and described, it will be appreciated by those skilled in the art that various changes and modifications might be made without departing from the scope of the invention, as defined in the appended claims.

Throughout this specification, the term "comprising" or "comprises" means including the component(s) specified but not to the exclusion of the presence of other components. The term "consisting essentially of" or "consists essentially of" means including the components specified but excluding other components except for materials present as impurities, unavoidable materials present as a result of processes used to provide the components, and components added for a purpose other than achieving the technical effect of the invention. Typically, when referring to compositions, a composition consisting essentially of a set of components will comprise less than 5% by weight, typically less than 3% by weight, more typically less than 1% by weight of non-specified components.

The term "consisting of" or "consists of" means including the components specified but excluding addition of other components.

Whenever appropriate, depending upon the context, the use of the term "comprises" or "comprising" may also be taken to encompass or include the meaning "consists essentially of" or "consisting essentially of", and may also be taken to include the meaning "consists of" or "consisting of".

For the avoidance of doubt, wherein amounts of components in a composition are described in wt%, this means the weight percentage of the specified component in relation to the whole composition referred to.

The optional features set out herein may be used either individually or in combination with each other where appropriate and particularly in the combinations as set out in the accompanying claims. The optional features for each aspect or exemplary embodiment of the invention as set out herein are also to be read as applicable to any other aspect or exemplary embodiments of the invention, where appropriate. In other words, the skilled person reading this specification should consider the optional features for each exemplary embodiment of the invention as interchangeable and combinable between different exemplary embodiments.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, and drawings), and/or all of the steps of any method or process so disclosed, may be combined in any combination, except combinations where at least some of such features and/or steps are mutually exclusive.

Each feature disclosed in this specification (including any accompanying claims, and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, and drawings), or to any novel one, or any novel combination, of the steps of any method or process so disclosed.

## Claims

1. A method of determining the concentration of a saccharide in a sample, the method comprising the steps of:

   a) providing the sample comprising the saccharide;
   b) treating the sample with an enzyme capable of catalysing a reaction of the saccharide;
   c) measuring a change in a parameter of the sample indicative of a change in ultrasonic velocity of the sample from prior to the treating of the sample with the enzyme until the reaction of the saccharide with the enzyme is substantially complete;
   d) after substantial completion of the reaction of the saccharide, treating the sample for a second time with the enzyme used in step b) and measuring the change in the parameter of the sample indicative of a change in ultrasonic velocity of the sample;
   e) obtaining the change in ultrasonic velocity of the sample caused by the reaction of the saccharide by subtracting the change in ultrasonic velocity caused by the second addition of enzyme measured in step d) from the change in ultrasonic velocity caused by the reaction measured in step c);
   f) obtaining the concentration of the saccharide in the sample prior to step b) from the change in ultrasonic velocity obtained in step e).

2. The method according to claim 1, wherein step d) is repeated at least once and an average of the change in ultrasonic velocity of the sample produced by each addition of the enzyme is used in step e) to subtract from the change in ultrasonic velocity caused by the reaction measured in step c).

3. The method according to claim 1 or claim 2, wherein the parameter of the sample indicative of a change in ultrasonic velocity is the ultrasonic velocity of the sample and is preferably measured at a frequency of from 1 to 10 MHz.

4. The method according to any one of the preceding claims, wherein the reaction of the saccharide catalysed by the enzyme is a hydrolysis reaction, preferably wherein the enzyme is β- galactosidase.

5. The method according to any one of the preceding claims, wherein the enzyme is in a solution in a concentration which is capable of substantially completely reacting the saccharide in the sample within 4 hours, preferably within 30 minutes.

6. The method according to claim 5, wherein the solution of enzyme does not contain glycerol or other stabilisers.

7. The method according to any one of the preceding claims, wherein the saccharide is lactose, preferably wherein the reaction catalysed by the enzyme is a hydrolysis reaction of lactose.

8. The method according to any one of the preceding claims, wherein the sample is milk or a milk-based drink.

9. The method according to any one of the preceding claims, wherein the sample is an infant formula.

10. The method according to any one of the preceding claims, wherein step f) involves converting the change in ultrasonic velocity to a change in concentration of bonds which can react with the enzyme in the reaction using a concentration increment of ultrasonic velocity for the saccharide; and using the change in the concentration the bonds which can react with the enzyme to calculate the concentration of the saccharide in the sample.

11. The method according to any one of the preceding claims, wherein the concentration of the saccharide in the sample obtained in step f) is adjusted to account for the concentration of galacto-oligosacharides in the sample prior to step b).

12. The method according to any one of the preceding claims, wherein step a) does not involve treating the sample with any further reagents, concentrating the sample or diluting the sample, preferably wherein step a) involves degassing the sample.

13. An ultrasonic meter configured to carry out the method according to any one of the preceding claims.

14. The ultrasonic meter according to claim 13 which is a high-resolution ultrasonic spectrometer.

15. A computer-readable medium comprising code configured to implement the method according to any one of the preceding claims using an ultrasonic meter and/or to implement the calculations of steps e) and f) of the method.

Fig. 1

Fig. 2

**Fig. 3**

**Fig. 4**

Europäisches
Patentamt

European
Patent Office

Office européen
des brevets

# EUROPEAN SEARCH REPORT

Application Number

EP 22 21 5104

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | BUCKIN, V.ALTAS, M. C.: "Ultrasonic Monitoring of Biocatalysis in Solutions and Complex Dispersions", CATALYSTS, vol. 7, no. 11, 15 November 2017 (2017-11-15), XP093038226, * abstract * * Paragraphs "5. Add-On Capabilities" and "6.2 Hydrolysis of Lactose" * ----- | 1-15 | INV. G01N29/024 |

TECHNICAL FIELDS
SEARCHED      (IPC)

G01N

The present search report has been drawn up for all claims

| Place of search | Date of completion of the search | Examiner |
|---|---|---|
| Munich | 25 May 2023 | Rouault, Patrick |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..............................................................................................
& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *CHEMICAL ABSTRACTS,* 34612-38-9
- **ALTAS, M. C. ; KUDRYASHOV, E. ; BUCKIN, V.** Ultrasonic Monitoring of Enzyme Catalysis; Enzyme Activity in Formulations for Lactose-Intolerant Infants. *Anal Chem,* 2016, vol. 88 (9), 4714-4723
- **BUCKIN, V.** High-resolution ultrasonic spectroscopy. *Journal of Sensors and Sensor Systems,* 2018, vol. 7 (1), 207-217
- **BUCKIN, V. ; ALTAS, M. C.** Ultrasonic Monitoring of Biocatalysis in Solutions and Complex Dispersions. *Catalysts,* 2017, vol. 7 (11
- **CHURAKOVA, E. ; PERI, K. ; VIS, J. S. ; SMITH, D. W. ; BEAM, J. M. ; VIJVERBERG, M. P. ; WINTER, R. T.** Accurate analysis of residual lactose in low-lactose milk: Comparing a variety of analytical techniques. *International Dairy Journal,* 2019, vol. 96, 126-131
- **DOLAN, J. W.** Calibration Curves, Part II: What are the Limits?. *LCGC North America,* 2009, vol. 27 (4), 306-312
- **GOLDBERG, R. N. ; TEWARI, Y. B.** A calorimetric and equilibrium investigation of the hydrolysis of lactose. *Journal of Biological Chemistry,* 1989, vol. 264 (17), 9897-9900
- Food Chemicals Codex. National Academy Press, 1996, vol. IV
- **LANDOLT-BÖRNSTEIN.** Zahlenwerte und Funktionen aus Naturwissen-schaften und Technik. Springer-Verlag, 1967
- **LI, M. ; CHEN, J. ; XU, J. ; FU, S. ; GONG, H.** Determination of Lactose in Milk by Raman Spectroscopy. *Analytical Letters,* 2015, vol. 48 (8), 1333-1340
- **LYNCH, J. M. ; BARBANO, D. M. ; FLEMING, J. R.** Determination of the Lactose Content of Fluid Milk by Spectrophotometric Enzymatic Analysis Using Weight Additions and Path Length Adjustment: Collaborative Study. *Journal of AOAC International,* 2007, vol. 90 (1
- **LYNCH, R. ; BURKE, A. ; BYRNE, J. ; BUCKIN, V.** Osmolality and molar mass of oligosaccharides in breast milks and infant formula during hydrolysis of lactose. Application of high-resolution ultrasonic spectroscopy. *Food Chem,* 2020, vol. 322, 126645
- **MANGAN, D. ; MCCLEARY, B. V. ; CULLETON, H. ; CORNAGGIA, C. ; IVORY, R. ; MCKIE, V. A. ; KARGELIS, T.** A novel enzymatic method for the measurement of lactose in lactose-free products. *J Sci Food Agric,* 2019, vol. 99 (2), 947-956
- **MARCZAK, W.** Water as a standard in the measurements of speed of sounds in liquids. *The Journal of the Acoustical Society of America,* 1997, vol. 102
- **MARRAKCHI, M. ; DZYADEVYCH, S. V. ; LAGARDE, F. ; MARTELET, C. ; JAFFREZIC-RENAULT, N.** Conductometric biosensor based on glucose oxidase and beta-galactosidase for specific lactose determination in milk. *Materials Science and Engineering: C,* 2008, vol. 28 (5-6), 872-875
- **R-BIOPHARM, B. M.** Lactose/D-Glucose UV-method for the determination of lactose and D-glucose in foodstuffs and other materials. R-Biopharm AG, 2017
- **RESA, P. ; BUCKIN, V.** Ultrasonic analysis of kinetic mechanism of hydrolysis of cellobiose by beta-glucosidase. *Anal Biochem,* 2011, vol. 415 (1), 1-11
- **ROBINSON, R. C.** Structures and Metabolic Properties of Bovine Milk Oligosaccharides and Their Potential in the Development of Novel Therapeutics. *Front Nutr,* 2019, vol. 6, 50
- **RODRIGUEZ-COLINAS, B. ; FERNANDEZ-ARROJO, L. ; BALLESTEROS, A. O. ; PLOU, F. J.** Galactooligosaccharides formation during enzymatic hydrolysis of lactose: towards a prebiotic-enriched milk. *Food Chemistry,* 2014, vol. 145, 388-394
- **VANDENPLAS, Y. ; DE GREEF, E. ; VEEREMAN, G.** Prebiotics in infant formula. *Gut Microbes,* 2014, vol. 5 (6), 681-687
- **YAKOVLEVA, M. ; BUZAS, O. ; MATSUMURA, H. ; SAMEJIMA, M. ; IGARASHI, K. ; LARSSON, P. O. ; DANIELSSON, B.** A novel combined thermometric and amperometric biosensor for lactose determination based on immobilised cellobiose dehydrogenase. *Biosens Bioelectron,* 2012, vol. 31 (1), 251-256